# EUROPEAN PATENT SPECIFICATION

(11) **EP 1 890 058 B1**
(45) Date of publication and mention of the grant of the patent: **25.07.2018**
(21) Application number: 07015776.3
(22) Date of filing: 10.08.2007
(51) Int. Cl.: F16K 41/08, F16L 3/08, F01L 3/08, F16J 15/32

(54) **Oil seal for valve stem**
Öldichtung für einen Ventilschaft
Joint à huile pour tige de vanne

(30) Priority: 15.08.2006 JP 2006221417
(43) Date of publication of application: 20.02.2008
(73) Proprietor: Carl Freudenberg KG, 69469 Weinheim (DE)
(72) Inventor: Ozawa, Kentaro, Fukushima-shi Fukushima, 960-1193 (JP)

(56) References cited:
- JP-A- 2000 329 234
- JP-A- 2002 071 029
- US-B1- 6 729 624

## Description

### BACKGROUND OF THE INVENTION

### Field of the Invention

The present invention relates to an oil seal for a valve stem which is installed to a valve guide in a valve gear mechanism of an internal combustion engine.

### Description of the Related Art

JP 2000-329234 A relates to an oil seal for a valve stem.

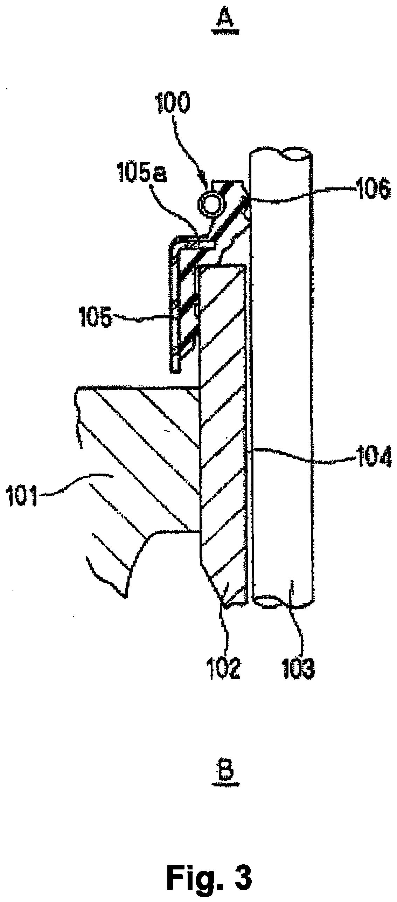

As an oil seal for a valve stem which is installed for sealing an annular space between a valve guide and a valve stem in a valve gear mechanism of an internal combustion engine, the following oil seals for valve stems are known. An oil seal 100 for a valve stem, as shown in FIG. 3, is installed for sealing an annular space 104 between a valve guide 102 fixed to a through hole formed in an inner peripheral side of a cylinder head 101 and having one end facing a cam side A and the other end facing a cylinder side B, and a valve stem 103 coaxially inserted in an inner peripheral side of the valve guide 102 so as to reciprocate therein and having a valve (not shown) attached to it on the cylinder side B for performing an intaking and exhausting operation. Further, the oil seal 100 for a valve stem is provided with a reinforcing ring 105 and a main seal lip 106, and is installed by fitting the reinforcing ring 105 to the valve guide 102, so lubricating oil on the cam side A is sealed from flowing out toward the cylinder side B and an appropriate amount of the lubricating oil is supplied to such an extent that a film of oil is formed in the annular space 104, to thereby control the amount of leaking oil, by allowing the main seal lip 106 to contact the peripheral surface of the valve stem 103.

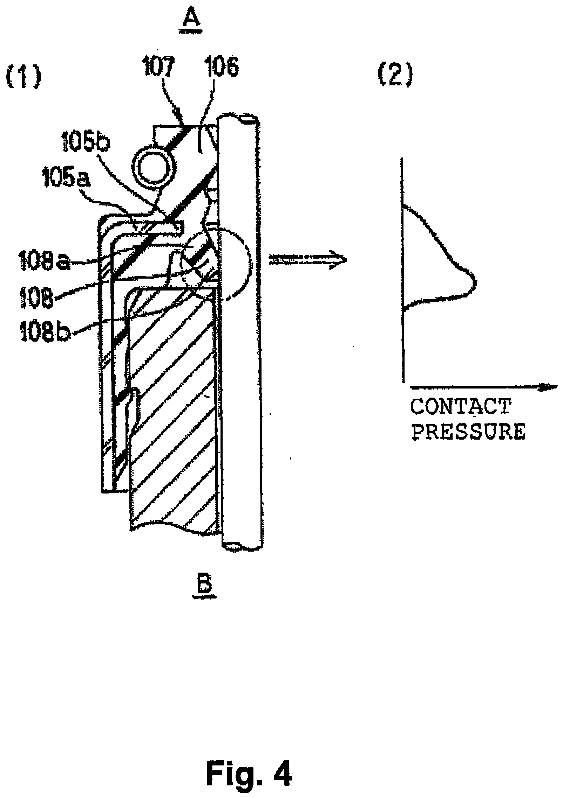

In recent years, along with a trend of providing high-power engines, the pressure in the port (cylinder side) (hereinafter, called as back pressure) tends to increase, whereby the behavior of the main seal lip 106 becomes unstable, and in a worst case, a trouble may occur in which the main seal lip 106 may be raised from the valve stem 103, and thereby there has been a problem that a required amount of leaking oil cannot be kept up. Therefore, as shown in FIG. 4 (1), a back pressure seal lip 108 is disposed on the cylinder side B of a main seal portion 107, separately from the main seal portion 107 having the main seal lip 106, and the back pressure is born by means of the back pressure seal lip 108, and thereby the behavior of the main seal lip 106 due to the back pressure is suppressed, and a variation of the amount of leaking oil has been intended to be suppressed. (Refer to Japanese Unexamined Patent Application Publication No. 2004-19852, described below).

However, in the circumstances in which a compact sizing of the engines is advanced and an installation space for the oil seal 100 for a valve stem is narrowed, if the back pressure seal lip 108 is disposed on the cylinder side B of a radially extending portion 105a, separately from the main seal portion 107 formed on the cam side A in relation to the radially extending portion 105a of the reinforcing ring 105, the oil seal 100 for a valve stem is elongated in the axial direction and large sized, with the result that the oil seal 100 for a valve stem is not able to satisfy demands of the compact structure of the engines, and a countermeasure for that purpose is required.

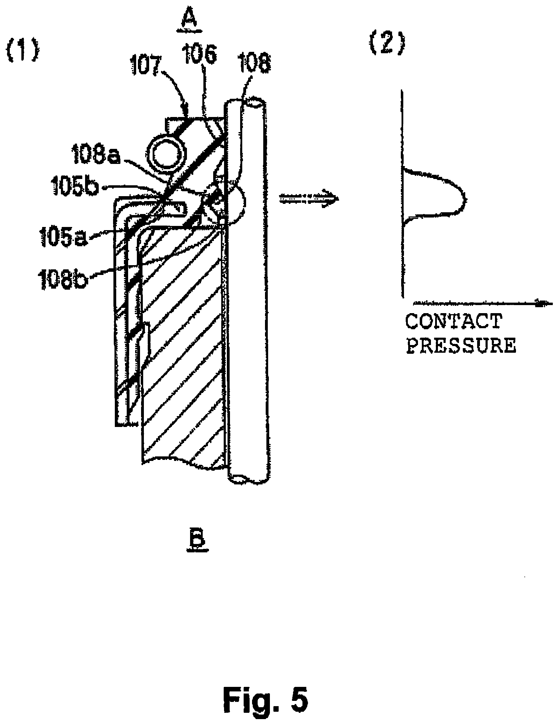

As a countermeasure for the above-described situation, as shown in FIG. 5(1), it is discussed that the back pressure seal lip 108 is integrally provided with the main seal portion 107 positioned on the cam side A of the radially extending portion 105a. However, in the conventional structure shown in FIG. 4(1), a stress is concentrated on a portion of the back pressure seal lip 108 where the same is fixed to an inner peripheral end portion 105b of the radially extending portion 105a when the back pressure seal lip 108 receives the back pressure, because the position of a base portion 108a of the back pressure seal lip 108 is positioned on the cylinder side B in relation to the radially extending portion 105a of the reinforcing ring 105. That is, since a deformation stress of the back pressure seal lip 108 is born by the inner peripheral end portion 105b of the radially extending portion 105a, a peak of the contact pressure can be brought to a lip leading end portion 108b of the back pressure seal lip 108, as shown in the contact pressure distribution in the back pressure seal lip 108 of FIG. 4(2), and it becomes possible to stably control the amount of leaking oil. On the other hand, in a structure shown in FIG. 5(1), since the back pressure seal lip 108 is integrally provided with the main seal portion 107, the base portion 108a of the back pressure seal lip 108 is positioned on the cam side A in relation to the radially extending portion 105a and thereby any reinforcing ring that bears the deformation stress of the back pressure seal lip 108 does not exist, and as shown in the contact pressure distribution in the back pressure seal lip of FIG. 5(2), a peak of the contact pressure cannot be brought to the lip leading end portion 108b. Thereby, a problem in which a control of the amount of leaking oil becomes unstable is found.

### SUMMARY OF THE INVENTION

In consideration of the above-described points, it is an object of the present invention to provide an assembly for sealing an annular space between a valve guide and a valve stem with an oil seal, which can be installed to a place having a narrow installation space in an axial direction even if a back pressure seal lip is provided, can stably exclude an influence of a back pressure to a main seal lip by means of the back pressure seal lip, and can achieve a reduction of a change in the amount of leaking oil, in the oil seal for a valve stem installed to a valve guide in a valve gear mechanism of an internal combustion engine. The invention is defined by an assembly according to claim 1. The present invention accomplishes below-described advantages. That is, in the oil seal for a valve stem according to the present invention provided with the above-described construction, since the back pressure seal lip is disposed in the main seal portion having the main seal lip positioned on the cam side in relation to the radially extending portion of the reinforcing ring, the length thereof can be shortened in the axial direction even if the back pressure seal lip is provided, and the oil seal for a valve stem can be installed to a place having a narrow installation space in which a compact sizing of the engines is advanced.

In addition, since the inclined portion is formed on the inner peripheral side of the radially extending portion of the reinforcing ring toward the cam side, the back pressure seal lip is positioned on the cylinder side in relation to the inner peripheral end portion of the inclined portion, and a stress is concentrated on a portion where the back pressure seal lip is fixed to the inner peripheral end portion of the inclined portion. Namely, when a back pressure is exerted from the cylinder side, the deformation stress of the back pressure seal lip can be born by means of the inclined portion of the reinforcing ring, and a peak of a contact pressure can be brought to the lip leading end portion of the back pressure seal lip. Accordingly, an influence of the back pressure to the main seal lip can stably be excluded by means of the back pressure seal lip, and a stable control of the amount of leaking oil can be performed. Thus, a reduction of a change in the amount of leaking oil can be achieved.

### BRIEF DESCRIPTION OF THE DRAWINGS

FIG. 1(1) is a cross-sectional view of a main part of an oil seal for a valve stem when installed according to the present invention;
FIG. 1(2) is a contact pressure distribution of a back pressure seal lip in the installed condition of FIG. 1(1);
FIG. 2 is a partially enlarged cross-sectional view of the oil seal for a valve stem of FIG. 1(1);
FIG. 3 is a cross-sectional view of a main part of the oil seal for a valve stem in an installed condition;
FIG. 4(1) is a cross-sectional view of a main part of an oil seal for a valve stem when installed according to a conventional example;
FIG. 4(2) is a contact pressure distribution of the back pressure seal lip in the installed condition of FIG. 4(1);
FIG. 5(1) is a cross-sectional view of a main part of an oil seal for a valve stem when installed according to another conventional example; and
FIG. 5(2) is a contact pressure distribution in the back pressure seal lip in the installed condition of FIG. 5(1).

### DESCRIPTION OF THE PREFERRED EMBODIMENTS

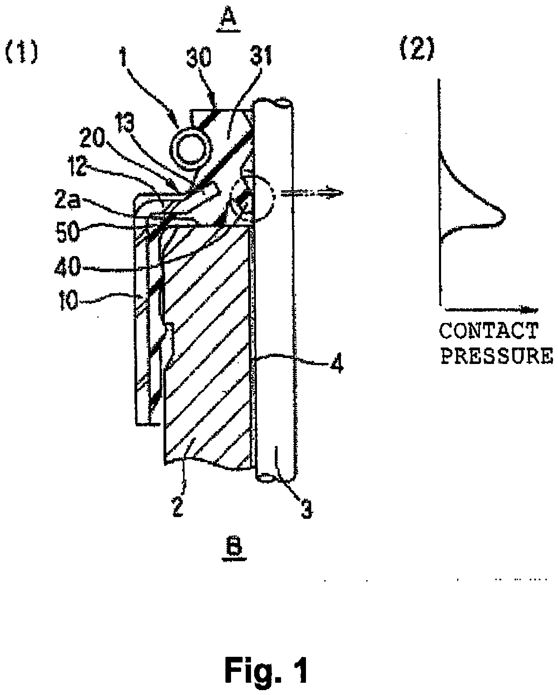

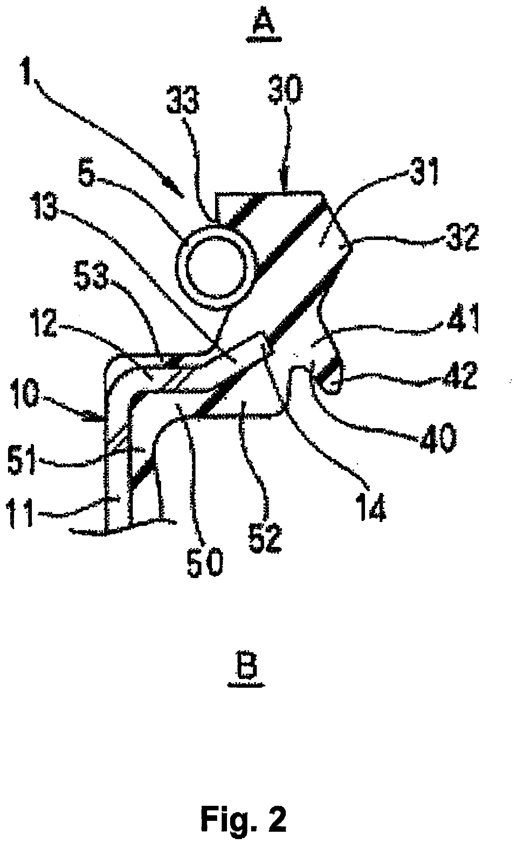

Hereinbelow, a preferred embodiment of the present invention will be explained with reference to the drawings by way of an example. FIG. 1(1) is a cross-sectional view showing a main part of an oil seal for a valve stem according to the present invention in an installed condition, FIG. 1(2) is a contact pressure distribution of the back pressure seal lip in the installed condition in FIG. 1(1), and FIG. 2 is a partially enlarged cross-sectional view of the oil seal for a valve stem of FIG. 1(1).

An oil seal 1 for a valve stem according to the present invention is installed for sealing an annular space 4 between a valve guide 2 having one end facing a cam side A and the other end facing the cylinder side B, and a valve stem 3 coaxially arranged in an inner peripheral side of the valve guide 2 so as to reciprocate therein and having a valve (not shown) attached to it on the cylinder side B for performing an intaking and exhausting operation, and the oil seal 1 for a valve stem is also provided with a reinforcing ring 10 and a main seal portion 30.

The reinforcing ring 10 is formed from a sheet metal or the like, and is composed of an axially extending portion 11 fitted to the outer peripheral side of the valve guide 2, a radially extending portion 12 extending from the end of the axially extending portion 11 on the cam side A in the radially inner direction, and an inclined portion 13 extending from the end of the radially extending portion 12 on the inner peripheral side toward the cam side A in the inclined manner.

A seal main body 20 formed from a rubber-like elastic element, which has a fixing sealing portion 50 and the main seal portion 30, integrally formed with each other, is fixed to the reinforcing ring 10, as described later. The fixing sealing portion 50 is formed from an inner peripheral side fixing sealing portion 51, which is fixed to the axially extending portion 11 of the reinforcing ring 10 and is brought into close contact with the outer peripheral surface of the valve guide 2, a cylinder side fixing sealing portion 52, which is fixed to the radially extending portion 12 and the inclined portion 13 on the cylinder side B and is brought into close contact with the cam side end surface 2a of the valve guide 2, and cam side fixing sealing portion 53, which is fixed to the radially extending portion 12 on the cam side A.

The main seal portion 30 is positioned on the cam side A in relation to the radially extending portion 12 of the reinforcing ring 10, and has a main seal lip 31 and a back pressure seal lip 40, integrally formed with each other. The main seal lip 31 has a lip leading end portion 32 extending from the inner peripheral end 14 of the inclined portion 13 toward the cam side A, and is configured to be slidably brought into close contact with the valve stem 3, and a concave portion 33 formed on the outer peripheral side thereof, which is on the other side of the lip leading end portion 32, for installing a garter spring 5 therein for applying a tension force to the main seal lip 31 so that the same can follow a fluctuation of the valve stem 3.

The back pressure seal lip 40 is positioned on the cam side A in relation to the radially extending portion 12, but a base portion 41 is positioned on the cylinder side B in relation to the inner peripheral end 14 of the inclined portion 13, and the lip leading end 42 extends toward the cylinder side B, and is slidably brought into close contact with the valve stem 3.

The oil seal 1 for a valve stem constructed as described above is installed in a manner such that the axially extending portion 11 of the reinforcing ring 10 is fitted to the valve guide 2 via the inner peripheral side fixing sealing portion 51, and the main seal portion 30 having the main seal lip 31 and the back pressure seal lip 40 is slidably brought into close contact with the valve stem 3, so the main seal lip 31 can seal the lubricating oil on the cam side A from flowing out toward the cylinder side B, and allows an appropriate amount of the lubricating oil to be supplied in such an extent that a film of oil is formed in the annular space 4, and to thereby control the amount of leaking oil.

In this case, since the back pressure seal lip 40 forms the main seal portion 30 while being integrally formed with the main seal lip 31, and is disposed at a position positioned on the cam side A in relation to the radially extending portion 12 of the reinforcing ring 10, it becomes possible to shorten the length thereof in the axially extending and to reduce a size of the oil seal 1 for a valve stem. Accordingly, even in a case that the installation space is narrowed due to compact sizing of the engine, the oil seal 1 for a valve stem can be installed.

Furthermore, since the inclined portion 13 is formed on the inner peripheral side of the radially extending portion 12 of the reinforcing ring 10 toward the cam side A, the base portion 41 of the back pressure seal lip 40 is positioned on the cylinder side B in relation to the inner peripheral end portion 14 of the inclined portion 13, and a stress is concentrated on a portion of the back pressure seal lip 40 where the same is fixed to the inner peripheral end portion 14 of the inclined portion 13. In other word, it becomes possible to bear a deformation stress of the back pressure seal lip 40 by means of the inner peripheral end portion 14 of the inclined portion 13 of the reinforcing ring 10 when a back pressure is applied from the cylinder side B. Furthermore, as shown in the contact pressure distribution of the back pressure seal lip 40 in FIG. 1(2), a peak of the contact pressure can be brought to the lip leading end portion 42 of the back pressure seal lip 40, and a stable control for the amount of leaking oil can be performed.

## Claims

1. A sealing assembly for sealing a valve gear mechanism of an internal combustion engine comprising a valve stem (3), a valve guide (2) and an oil seal (1), the valve guide (2) having one end facing a cam side (A) and the other end facing a cylinder side (B), and the valve stem (3) being coaxially arranged in an inner peripheral side of the valve guide (2) so as to reciprocate therein, the oil seal (1) sealing an annular space between the valve guide (2) and the valve steam (3), the oil seal (1) being provided with a reinforcing ring (10) having an axially extending portion (11) fitted to an outer peripheral side of the valve guide (2), a radially extending portion (12) extending from the end of the axially extending portion (11) on the cam side (A) in the radially inner direction and an inclined portion (13) formed on an inner peripheral side of the radially extending portion (12) a main seal portion (30) having a main seal lip (31) and a back pressure seal lip (40), the main seal lip (31) being slidably brought into close contact with the valve stem (3) and extending toward the cam side (A), the back pressure seal lip (40) being positioned on the cylinder side (B) in relation to the main seal lip (31) and preventing a pressure from being applied to the main seal lip (31), **characterized in that**, the inclined portion (13) of the reinforcing ring (10) extends in an inclined manner toward the cam side (A) and the main seal portion (30) is positioned on the cam side (A) in relation to the radially extending portion (12), and the back pressure seal lip (40) is positioned on the cylinder side (B) in relation to an inner peripheral end portion of the inclined portion (13), wherein a base portion (41) of the back pressure seal lip (40) is positioned on the cylinder side (B) in relation to the inner peripheral end (14) of the inclined portion (13), and a lip leeding end (42) of the back pressure seal lip (40) extends toward the cylinder side (B), and is slidably brought into close contact with the valve stem (3).

## Patentansprüche

1. Dichtungsanordnung zum Abdichten eines Ventiltriebmechanismus eines Verbrennungsmotors, aufweisend einen Ventilschaft (3), eine Ventilführung (2) und eine Öldichtung (1), wobei die Ventilführung (2) ein Ende aufweist, welches einer Nockenseite (A) zugewandt ist, und das andere Ende einer Zylinderseite (B) zugewandt ist, und wobei der Ventilschaft (3) koaxial an einer inneren Umfangsseite der Ventilführung (2) angeordnet ist, um sich darin hin- und herzubewegen, wobei die Öldichtung (1) einen ringförmigen Raum zwischen der Ventilführung (2) und dem Ventilschaft (3) abdichtet,
wobei die Öldichtung (1) mit einem Verstärkungsring (10) mit einem sich axial erstreckenden Abschnitt (11), welcher an einer äußeren Umfangsseite der Ventilführung (2) anliegt, einem sich radial erstreckenden Abschnitt (12), welcher sich von einem Ende des sich axial erstreckenden Abschnitts (11) auf der Nockenseite (A) in die radial innere Richtung erstreckt, und einem abgewinkelten Abschnitt (13), welcher an einer inneren Umfangsseite des sich radial erstreckenden Abschnitts (12) ausgebildet ist, und einem Hauptdichtungsabschnitt (30) mit einer Hauptdichtungslippe (31) und einer Gegendruck-Dichtungslippe (40) versehen ist, wobei die Hauptdichtungslippe (31) verschiebbar in engen Kontakt mit dem Ventilschaft (3) gebracht wird und sich in Richtung auf die Nockenseite (A) erstreckt, wobei die Gegendruck-Dichtungslippe (40) in Bezug auf die Hauptdichtungslippe (31) auf der Zylinderseite (B) angeordnet ist und verhindert, dass ein Druck auf die Hauptdichtungslippe (31) aufgebracht wird,
**dadurch gekennzeichnet, dass** sich der abgewinkelte Abschnitt (13) des Verstärkungsrings (10) in einer abgewinkelten Weise in Richtung auf die Nockenseite (A) erstreckt, und der Hauptdichtungsabschnitt (30) in Bezug auf den sich radial erstreckenden Abschnitt (12) auf der Nockenseite (A) angeordnet ist, und die Gegendruck-Dichtungslippe (40) in Bezug zu einem inneren Umfangsendabschnitt des abgewinkelten Abschnitts (13) auf der Zylinderseite (B) angeordnet ist, wobei ein Basisabschnitt (41) der Gegendruck-Dichtungslippe (40) in Bezug auf das innere Umfangsende (14) des abgewinkelten Abschnitts (13) auf der Zylinderseite (B) angeordnet ist und ein vorderes Lippenende (42) der Gegendruck-Dichtungslippe (40) sich in Richtung auf die Zylinderseite (B) erstreckt und verschiebbar in engen Kontakt mit dem Ventilschaft (3) gebracht wird.

## Revendications

1. Ensemble d'étanchéité pour réaliser l'étanchéité d'un mécanisme de commande de soupapes d'un moteur à combustion interne comprenant une tige de soupape (3), un guide de soupape (2) et un joint à huile (1), le guide de soupape (2) ayant une extrémité faisant face à un côté de came (A) et l'autre extrémité faisant face à un côté de cylindre (B), et la tige de soupape (3) étant agencée coaxialement dans un côté périphérique intérieur du guide de soupape (2) de façon à effectuer un mouvement réciproque dans celui-ci, le joint à huile (1) obturant un espace annulaire entre le guide de soupape (2) et la tige de soupape (3), le joint à huile (1) étant doté d'un anneau de renforcement (10) comportant une portion s'étendant axialement (11) ajustée sur un côté périphérique extérieur du guide de soupape (2), une portion s'étendant radialement (12) qui s'étend à partir de l'extrémité de la portion s'étendant axialement (11) sur le côté de came (A) dans la direction radialement intérieure et une portion inclinée (13) formée sur un côté périphérique intérieur de la portion s'étendant radialement (12), et une portion de joint principale (30) comportant une lèvre de joint principale (31) et une lèvre de joint de pression arrière (40), la lèvre de joint principale (31) étant mise en contact étroit glissant avec la tige de soupape (3) et s'étendant en direction du côté de came (A), la lèvre de joint de pression arrière (40) étant positionnée sur le côté de cylindre (B) par rapport à la lèvre de joint principale (31) et empêchant qu'une pression soit appliquée à la lèvre de joint principale (31),
**caractérisé en ce que** la portion inclinée (13) de l'anneau de renforcement (10) s'étend d'une façon inclinée en direction du côté de came (A) et la portion de joint principale (30) est positionnée sur le côté de came (A) par rapport à la portion s'étendant radialement (12), et la lèvre de joint de pression arrière (40) est positionnée sur le côté de cylindre (B) par rapport à une portion d'extrémité périphérique intérieure de la portion inclinée (13), dans lequel une portion de base (41) de la lèvre de joint de pression arrière (40) est positionnée sur le côté de cylindre (B) par rapport à l'extrémité périphérique intérieure (14) de la portion inclinée (13), et une extrémité de guidage de lèvre (42) de la lèvre de joint de pression arrière (40) s'étend en direction du côté de cylindre (B), et est mise en contact étroit glissant avec la tige de soupape (3).
